# EUROPEAN PATENT SPECIFICATION

(11) **EP 1 000 522 B1**
(45) Date of publication and mention of the grant of the patent: **03.12.2008**
(21) Application number: 99917035.0
(22) Date of filing: 14.05.1999
(51) Int. Cl.: H04Q 9/00, G08C 23/04, H01H 9/02, H03J 9/06

(54) **REMOTE CONTROL DEVICE**
FERNBEDIENUNGSGERÄT
APPAREIL DE TELECOMMANDE

(30) Priority: 26.05.1998 EP 98201744
(43) Date of publication of application: 17.05.2000
(73) Proprietor: Koninklijke Philips Electronics N.V., 5621 BA Eindhoven (NL)
(72) Inventor: LAMBRECHTS, Marc, E., C., NL-5656 AA Eindhoven (NL); NOTE, Stefaan, M., M., NL-5656 AA Eindhoven (NL); SCHMITZ, Herman, J., R., NL-5656 AA Eindhoven (NL)
(74) Representative: Schmitz, Herman Jan Renier
(86) International application number: PCT/IB1999/000883
(87) International publication number: WO 1999/062287

(56) References cited:
- DE-A1- 3 713 428
- DE-A1- 19 520 947
- US-A- 4 878 055
- US-A- 5 181 024
- US-A- 5 534 865
- JP 10174178 A (SANYO ELECTRIC CO LTD) 26-06-1998 (Abstract) World Patents Index (online), London, U.K:Derwent Publications, Ltd. (retrieved on 05-11-1999). Retrieved from:EPO WPI Database. DW 199836, Accession No. 1998-420786; & JP 10174178 (SANYO ELECTRIC CO LTD) 30-09-1998 (Abstract). (online)(retrieved on 05-11-1999). Retrieved from: EPO PAJ Database; & JP 10174178 (SANYO ELECTRIC CO LTD) 26 JUNE 1998, figures 1-5
- JP 9046779 A (SANYO ELECTRIC CO LTD) 14-02-1997 (abstract) World Patents Index (online). London, U.K:Derwent Publications, Ltd. (retrieved on 05-11-1999). Retrieved from:EPO WPI Database. DW199717, Accession No. 1997-186515; & JP 9046779 (SANYO ELECTRIC CO LTD) 30-06-1997 (abstract). (online)(retrieved on 05-11-1999). Retrieved from: EPO PAJ Database; & JP 9046779 (SANYO ELECTRIC CO LTD) 14 February 1997, figures 1,7
- JP 10032887 A (SANYO ELECTRIC CO LTD) 03-02-1998 (abstract) World Patent Index (online). London, U.K:Derwent Publications, Ltd. (retrieved on 05-11-1999). Retrieved from:EPO WPI Database. DW199815, Accession No. 1998-166183; & JP 10032887 (SANYO ELECTRIC CO LTD) 30-04-1998 (abstract. (online)(retrieved on 05-11-1999). Retrieved from: EPO PAJ Database: & JP 10032887 (SANYO ELECTRIC CO LTD) 3 February 1998, figures 1-5
- JP 6189383 A (TOSHIBA KK) 08-07-1994 (abstract) World Patents Index (online). Londen, U.K:Derwent Publications, Ltd: (retrieved on 05-11-1999). Retrieved from: EPO WPI Database. DW199432, Accession No. 1994-259285; & JP 6189383 (TOSHIBA CORP) 14-10-1994 (abstract). (online)(retrieved on 05-11-1999). Retrieved from:EPO PAJ Database.

## Description

### FIELD OF THE INVENTION

The invention relates to a handheld remote control device, comprising a first keypad for generating first control signals and a cover which is slewably attached to the device and covers the first keypad when it is closed, said cover carrying a second keypad for generating second control signals.

### BACKGROUND OF THE INVENTION

A known remote control device as defined in the opening paragraph is disclosed in German Offenlegungsschrift DE-A-37 13 428. The cover of this prior art device comprises a keypad for controlling often used functions of an appliance such as channel selection and volume setting of a TV, or channel selection and play/record control of a VCR. Seldomly used functions such as VCR programming and track control are controlled by a further keypad which is only accessible if the cover is open.

A remote control device is typically aimed towards the appliance which is to be controlled. This is certainly the case if the control signals are transmitted in the form of infrared light beams. The prior art device is to be aimed in one direction, irrespective of whether the cover is closed or open.

Usually, the layout of a keypad (which is understood to mean, inter alia, the shape of the keys, button labels, printing of the keypad) corresponds to the direction in which the device is held when the appliance is being controlled. This is not always desirable.

JP-A-10032887 discloses a handheld remote control device which has an elongated shape having a length axis and a width axis, the first keypad being laid out for using the device in a first direction corresponding to said length axis or width axis, and the other keypad being laid out for using the device in a second direction perpendicular to said first direction, and emitting means for emitting the control signals in the form of directional beams, said emitting means including first emitting means for emitting the first control signals in substantially the first direction and second emitting means for emitting the second control signals in substantially the second direction.

### OBJECT AND SUMMARY OF THE INVENTION

It is an object of the invention to provide a remote control device in which the layout of each keypad is adapted to its purpose, and in which the energy consumption is reduced.

To achieve this and other objects, the device in accordance with the invention is characterized in that the device has an elongated shape having a length axis and a width axis, the first keypad being laid out for using the device in a first direction corresponding to said length axis or width axis, and the second keypad being laid out for using the device in a second direction perpendicular to said first direction, that the device comprises emitting means for emitting the control signals in the form of directional beams, said emitting means including first emitting means for emitting the first control signals in substantially the first direction and second emitting means for emitting the second control signals in substantially the second direction, and further comprises detection means for detecting whether the cover is open or closed, the detection means being arranged to disable the second emitting means if the cover is open and disable the first emitting means if the cover is closed.

The invention is based on the recognition that appliances are emerging which are not only to be controlled by a traditional slim remote control device, but also require data input from a keyboard which is to be rotated through 90 degrees with respect to the conventional direction. An example of such an appliance is a television receiver with provisions for accessing the Internet. Such a "Web-TV" requires an alphanumeric keypad, preferably a QWERTY keyboard, for entering WWW addresses and e-mails. The invention allows such an alphanumeric keypad and a conventional remote control keypad to be combined in a single remote control device.

It should be noted that a device comprising an alphanumeric keyboard under a cover which carries a further keypad is known per se from German Offenlegungsschrift DE-A-195 20 947. This device, however, is a portable computer with embedded telecommunication facilities.

The device comprises emitting means for emitting the control signals in the form of directional beams, for example, in the form of infrared light signals. To this effect the device includes first emitting means for emitting the first control signals in substantially the first direction and second emitting means for emitting the second control signals in substantially the second direction. Herewith it is achieved that the operational distance from the remote control device to the appliance is not adversely affected when the device is held in either one of the two directions. Further, the device comprises detection means for detecting whether the cover is open or closed, the detection means being arranged to disable the second emitting means if the cover is open and disable the first emitting means if the cover is closed. With such an embodiment, battery energy is saved because only the emitter corresponding to the keypad which is actually used is active.

In the further embodiment of the device, the keys of the second keypad produce underneath the cover so as to mechanically activate corresponding keys of the first keypad when the cover is closed. This is known per se from the German Offenlegungsschrift DE-A-37 13 428, already cited before. In order to achieve that keys of the first keypad produce control signals which are different (i.e. different command codes) from those produced by the corresponding keys of the second keypad, the device comprises detection means for detecting whether the cover is open or closed, the detection means being arranged to enable the first control signals to be generated if the cover is open and the second control signals to be generated if the cover is closed. These detection means (which control the command codes) and the aforementioned detection means (which disable one of the emitters) may be the same.

### BRIEF DESCRIPTION OF THE DRAWINGS

Fig. 1 shows a top view of a remote control device in accordance with the invention with the cover closed.
Fig. 2 shows a top view of a remote control device in accordance with the invention with the cover open.
Fig. 3 shows a schematic diagram of the electric circuitry of the remote control device in accordance with the invention.
Fig. 4 shows a flow chart of operations performed by a microprocessor which is shown in Fig. 3.

### DESCRIPTION OF A PREFERRED EMBODIMENT

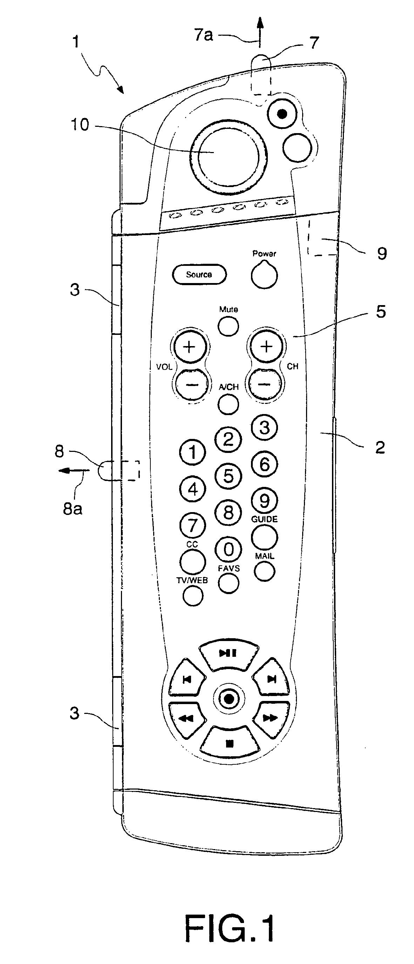

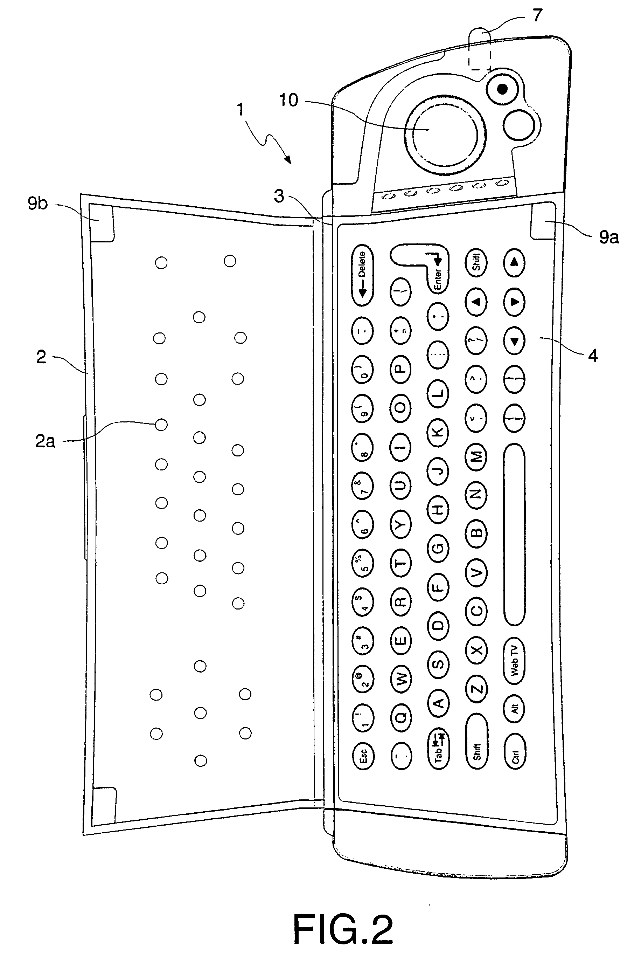

Figs. 1 and 2 show a top view of a remote control device **1** in accordance with the invention with a cover **2** closed and open, respectively. The cover is attached to the device body by means of a hinge **3.** As shown in the Figs., a first keypad **4** is fixedly attached to the device body and the cover carries a second keypad **5.**

The first keypad **4** is a full alphanumeric QWERTY keypad having a conventional layout. That is, the keys are arranged, and text on and next to the keys is printed, such that when the device is operated, its length axis is perpendicular to the imaginary line from the remote control device to the controlled appliance. The second keypad **5** comprises keys for controlling the appliance in a conventional manner, for example, keys for entering a channel number, for incrementing or decrementing the volume or channel number, for controlling the tape function of a VCR, etc. The layout of this keypad is such that when the device is operated, its length axis is aimed towards the controlled appliance. A trackball or mousepad **10** for controlling a cursor is also provided.

Fig. 1 further shows two infrared Light Emitting Diodes (LEDs), one infrared LED **7** being located at the top side of the device and emitting infrared light in a direction **7a** corresponding to the device's length axis, and one infrared LED **8** being located at the left side and emitting infrared light in a direction **8a** corresponding to the device's width axis. When the cover is open, it is blocked in a position so as not to impede the emission of light from LED **8.**

A switch **9** is also shown in the Figs. The switch **9** comprises a first member **9a** which is fixedly attached to the device body and a second member **9b** which is fixedly attached to the cover **2.** Upon closing the cover, both members **9a** and **9b** engage each other. The switch **9** is thus closed when the cover is closed.

The second keypad **5** on the cover **2** may be an autonomous keypad. This is understood to mean that each key includes an individual sensor which, when the key is depressed, applies a corresponding signal to the device's electric circuitry through a flexible wiring arrangement (not shown). In a preferred embodiment, however, as shown in Fig. 2, the cover **2** includes holes **2a,** one for each key. Through said holes, a protrusion of each key extends underneath the cover so as to mechanically activate the underlying key of keypad **4** if the cover is closed. For example, the key labeled "5" of keypad **5** activates the key labeled "J" of keypad **4.**

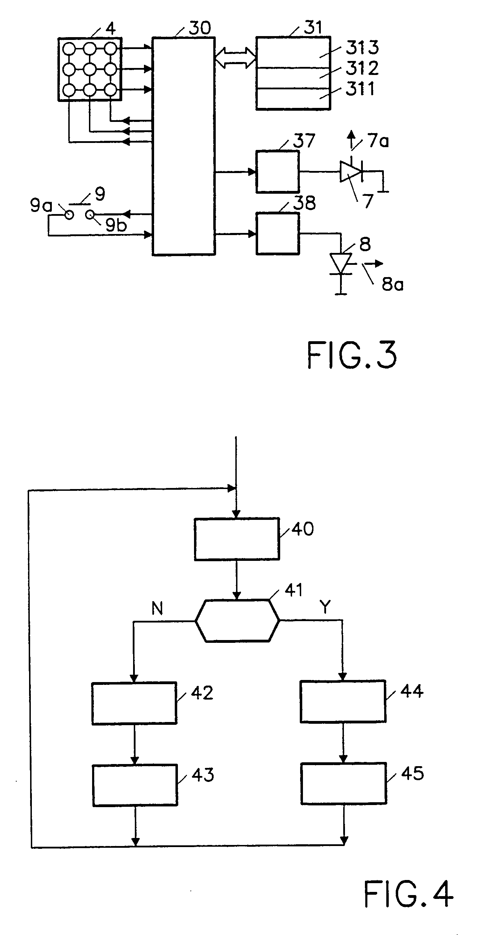

A schematic diagram of the electric circuitry of the remote control device in accordance with the invention is shown in Fig. 3. Reference numerals already used before denote the same elements. The device comprises a microprocessor **30** which is connected to the keypad **4** and the members **9a** and **9b** of the switch **9** through various input and output port terminals. The microprocessor is further connected to a driver stage **37** for driving the top-LED **7** and to a driver stage **38** for driving the side-LED **8.** The processor is also connected to a read-only-memory (ROM) **31** having a memory section **311** in which a first set of remote control command codes is stored, a memory section **312** in which a second set of remote control command codes is stored, and a memory section **313** in which a control program defining the operation of the processor is stored. The ROM may also be embedded in the microprocessor.

A flow chart of operations performed by the microprocessor is shown in Fig. 4. In a step **40,** the processor scans the keypad **4**, awaits the depression of a key and identifies which key has been depressed. In a step **41,** the processor checks whether the switch **9** is closed. If the switch is not closed (i.e., the cover **2** is open), it is concluded that an alphanumeric key of keypad **4** is depressed. In that case the processor reads, in a step **42,** the command code to be transmitted from the first memory section **311** of ROM **31.** Then, in a step **43,** the relevant command code is applied to driver stage **38** which drives the side-LED **8** so as to emit the infrared command signal in the direction of the width-axis **8a.** If the switch **9** is closed (i.e., the cover **2** is closed), it is concluded that a control key of keypad **5** is depressed. In that case the processor reads, in a step **44**, the command code to be transmitted from the second memory section **312** of ROM **31.** Then, in a step **45**, the relevant command code is applied to driver stage **37** which drives the top-LED **7** so as to emit the infrared command signal in the direction of the length-axis **7a.** Thus, if the alphanumeric key labeled "J" is depressed, a code for the letter "J" will be transmitted through side-LED **8.** If the key labeled "5" on the cover is depressed, depression of the same alphanumeric key "J" is detected but, since the switch **9** is now closed, a code for the channel select digit "5" will be transmitted through top-LED **7.**

In summary, a remote control device (1) is disclosed for controlling a "Web-TV". The device has a first keypad (5) for controlling the conventional TV and VCR functions. The normal TV and VCR control commands are transmitted through a top-LED (7) in a first direction (7a). The keypad is accommodated on a cover (2). When the cover is open, a second keypad is accessible for entering alphanumeric data such as Web-addresses and e-mails. To use this QWERTY keypad in a convenient and familiar manner, the device is rotated through 90 degrees. In this operating mode (Fig. 2), the key commands are transmitted through a side-LED (8) in a second direction (8a). A switch (9) detects whether the cover is open or closed and activates the relevant LED.

## Claims

1. A handheld remote control device (1) comprising a first keypad for generating first control signals and a cover (2) which is slewably attached to the device and covers the first keypad (4) when it is closed, said cover carrying a second keypad (5) for generating second control signals, **characterized in that** the device has an elongated shape having a length axis and a width axis, the first keypad (4) being laid out for using the device in a first direction corresponding to said length axis or width axis, and the second keypad (5) being laid out for using a device in a second direction perpendicular to said first direction, that the device comprises emitting means (7, 8) for emitting the control signals in the form of directional beams, said emitting means including first emitting means (8) for emitting the first control signals in substantially the first direction and second emitting means (7) for emitting the second control signals in substantially the second direction, and further comprises detection means (9a,b) for detecting whether the cover is open or closed, the detection means being arranged to disable the second emitting means (8) if the cover is open and disable the first emitting means (7) if the cover is closed.

2. A device as claimed in claim 1, wherein keys of the second keypad (5) protrude underneath the cover (2) so as to mechanically activate corresponding keys of the first keypad (4) when the cover is closed, the device further comprising detection means (9a, b) for detecting whether the cover is open or closed, the detection means being arranged to enable the first control signals to be generated if the cover is open and the second control signals to be generated if the cover is closed.

3. A device as claimed in any one of the preceding claims, wherein the second keypad comprises keys for controlling respective functions of an electronic appliance, and the first keypad (4) is an alphanumeric keypad for applying alphanumeric data to said appliance.

## Patentansprüche

1. Fernbedienungshandgerät (1) mit einem ersten Tastenfeld zum Erzeugen erster Steuersignale, und mit einem Deckel (2), der an dem Gerät und an dem Deckel drehbar angeordnet ist und in geschlossenem Zustand das erste Tastenfeld (4) bedeckt, wobei der genannte Deckel ein zweites Tastenfeld (5) zum Erzeugen zweiter Steuersignale trägt, **dadurch gekennzeichnet, dass** das Gerät eine längliche Form mit einer Längsachse und einer Breitenachse hat, wobei das erste Tastenfeld (4) zur Verwendung des Geräts in einer ersten Gebr4auchsrichtung entsprechend der Längsachse oder der Breitenachse gemeint ist, und wobei das zweite Tastenfeld (5) zur Verwendung in einer zweiten Gebrauchsrichtung senkrecht zu der genannten ersten Gebrauchsrichtung gemeint ist, dass das Gerät Sendemittel (7, 8) aufweist zum Aussenden der Steuersignale in Form von Richtstrahlen, wobei die genannten sendemittel erste Sendemittel (8) zum Aussenden der ersten Steuersignale in im Wesentlichen der ersten Richtung umfassen, und zweite Sendemittel (7) zum Aussenden der zweiten Steuersignale in im Wesentlichen der zweiten Richtung, und dass das Gerät weiterhin Detektionsmittel (9a, b) aufweist um zu detektieren, ob der Deckel offen oder geschlossen ist, wobei die Detektionsmittel dazu vorgesehen sind, die zweiten Sendemittel (8) auszuschalten, wenn der Deckel offen ist, und die ersten Mittel (7) auszuschalten, wenn der Deckel geschlossen ist.

2. Gerät nach Anspruch 1, wobei Tasten des zweiten Tastenfeldes (5) unterhalb des Deckels (2) herausragen um auf mechanische Art und Weise entsprechende Tasten des ersten Tastenfeldes (4) zu aktivieren, wenn der Deckel geschlossen ist, wobei das Gerät weiterhin Detektionsmittel (9a, b) aufweisen um zu detektieren, ob der Deckel offen oder geschlossen ist, wobei die Detektionsmittel dazu vorgesehen sind, zu ermöglichen, dass die ersten Steuersignale erzeugt werden, wenn der Deckel offen ist und dass die zweiten Steuersignale erzeugt werden, wenn der Deckel geschlossen ist.

3. Gerät nach einem der vorstehenden Ansprüche, wobei das zweite Tastenfeld Tasten aufweist zur Steuerung betreffender Funktionen eines elektronischen Geräts und wobei das erste Tastenfeld (4) ein alphanumerisches Tastenfeld ist zum Zusenden alphanumerischer Daten zu dem genannten Gerät.

## Revendications

1. Dispositif portable de commande à distance (1) comprenant un premier clavier numérique pour générer des premiers signaux de commande et une couverture (2) qui est fixée de façon pivotante au dispositif et qui couvre le premier clavier numérique (4) lorsqu'il est fermé, ladite couverture portant un deuxième clavier numérique (5) pour générer des deuxièmes signaux de commande, **caractérisé en ce que** le dispositif présente une forme allongée ayant un axe de longueur et un axe de largeur, le premier clavier numérique (4) étant présenté pour utiliser le dispositif dans une première direction correspondant audit axe de longueur ou audit axe de largeur et le deuxième clavier numérique (5) étant présenté pour utiliser un dispositif dans une deuxième direction qui est perpendiculaire à ladite première direction, **en ce que** le dispositif comprend des moyens émetteurs (7, 8) pour émettre les signaux de commande sous forme de faisceaux directionnels, lesdits moyens émetteurs comprenant des premiers moyens émetteurs (8) pour émettre les premiers signaux de commande dans sensiblement la première direction et des deuxièmes moyens émetteurs (7) pour émettre les deuxièmes signaux de commande dans sensiblement la deuxième direction, et **en ce qu'**il comprend encore des moyens de détection (9a, b) pour détecter si la couverture est ouverte ou fermée, les moyens de détection étant agencés de manière à désactiver les deuxièmes moyens émetteurs (8) si la couverture est ouverte et à désactiver les premiers moyens émetteurs (7) si la couverture est fermée.

2. Dispositif selon la revendication 1, dans lequel des touches du deuxième clavier numérique (5) dépassent au-dessous de la couverture (2) de manière à activer mécaniquement les touches correspondantes du premier clavier numérique (4) lorsque la couverture est fermée, le dispositif comprenant encore des moyens de détection (9a, b) pour détecter si la couverture est ouverte ou fermée, les moyens de détection étant agencés de manière à activer les premiers signaux de commande à générer si la couverture est ouverte et à activer les deuxièmes signaux de commande à générer si la couverture est fermée.

3. Dispositif selon l'une quelconque des revendications précédentes 1 à 2, dans lequel le deuxième clavier comprend des touches pour commander des fonctions respectives dans un appareil électronique et dans lequel le premier clavier numérique (4) est un clavier alphanumérique pour appliquer des données alphanumériques audit appareil.
